# EUROPÄISCHE PATENTANMELDUNG

(11) **EP 3 366 908 A1**
(43) Veröffentlichungstag der Anmeldung: **29.08.2018**
(21) Anmeldenummer: 18158523.3
(22) Anmeldetag: 26.02.2018
(51) Int. Cl.: F02K 1/12

(54) **KONVERGENT-DIVERGENTE SCHUBDÜSE FÜR EIN TURBOFAN-TRIEBWERK EINES ÜBERSCHALLFLUGZEUGS**

(30) Priorität: 27.02.2017 DE 102017104043
(71) Anmelder: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Müller, Wolfram Hubertus

(57) **Zusammenfassung**

Die Erfindung betrifft eine konvergent-divergente Schubdüse (30) für ein Turbofan-Triebwerk eines Überschallflugzeugs, wobei die Schubdüse (30) eine Innenwand (31) aufweist, die einen Strömungskanal (15) durch die Schubdüse radial außen begrenzt, wobei der Strömungskanal (15) eine Düsenhalsfläche (A8) und eine Düsenaustrittsfläche (A9) aufweist. Die Innenwand (31) umfasst eine erste Gruppe verstellbarer Segmente (40), die einen stromaufwärtigen konvergenten Bereich der Schubdüse (30) ausbilden, und eine zweite Gruppe verstellbarer Segmente (50), die einen stromabwärtigen konstant/divergenten Bereich der Schubdüse (30) ausbilden. Es ist vorgesehen, dass die Segmente (40) der ersten Gruppe oder die Segmente (50) der zweiten Gruppe zumindest in einem Bereich (42), der an die andere Gruppe angrenzt, zum Strömungskanal (15) hin konvex gekrümmt sind, im Bereich der konvexen Krümmung die Düsenhalsfläche (A8) ausbilden und axial beabstandet zur axialen Position der Düsenhalsfläche (A8) an die Segmente (50) der jeweils anderen Gruppe angrenzen. Dabei sind aneinander angrenzende Segmente (40, 50) der beiden Gruppen durch einen Schiebemechanismus (45, 55) miteinander verbunden.

## Beschreibung

Die Erfindung betrifft eine konvergent-divergente Schubdüse für ein Turbofan-Triebwerk eines Überschallflugzeugs gemäß dem Oberbegriff des Patentanspruchs 1.

Es ist allgemein anzustreben, bei einer konvergent-divergenten Schubdüse eine Vielzahl von Kombinationen im Hinblick auf die Düsenhalsfläche (üblicherweise als A8 bezeichnet) und die Düsenaustrittsfläche (üblicherweise als A9 bezeichnet) realisieren zu können, um abhängig vom Betriebsmodus des Turbofan-Triebwerks diese Parameter in geeigneter Weise einstellen zu können. Hierzu ist es bekannt, eine Schubdüse mit variabler Kontur auszubilden, beispielsweise als Iris/Petal-Düse mit einer Vielzahl einzelner verstellbarer Segmente. So ist es bekannt, bei einer Schubdüse eine Gruppe verstellbarer konvergenter Segmente und eine Gruppe verstellbarer divergenter Segmente vorzusehen, die jeweils kreisförmig angeordnet sind. Die einzelnen Segmente sind für ihre Verstellbarkeit mit Aktoren verbunden. Eine solche Schubdüse ist beispielsweise aus der US 9 464 594 B2 sowie von den Triebwerken der Kampfflugzeuge McDonnell Douglas F-15, Suchoi Su-27 und Suchoi Su-34 bekannt.

Ein Nachteil solcher Schubdüsen besteht darin, dass an der Düsenhalsfläche aufgrund des dort erfolgenden Übergangs von einer subsonischen Strömung zu einer supersonischen Strömung starke Schockwellen auftreten, die zum Triebwerkslärm beitragen.

Der vorliegenden Erfindung liegt die Aufgabe zugrunde, eine für einen Überschallbetrieb geeignete konvergent-divergente Schubdüse eines Turbofan-Triebwerks bereitzustellen, die in verringertem Maße Lärm erzeugt. Des Weiteren soll ein Verfahren zur Reduzierung des Heckwiderstands hinter einer solchen Schubdüse bereitgestellt werden.

Diese Aufgabe wird durch eine Schubdüse mit den Merkmalen des Patentanspruchs 1 gelöst. Ausgestaltungen der Erfindung sind in den Unteransprüchen angegeben.

Danach betrachtet die vorliegende Erfindung gemäß einem ersten Erfindungsaspekt eine konvergent-divergente Schubdüse mit einer Innenwand, die eine erste Gruppe verstellbarer Segmente und eine zweite Gruppe verstellbarer Segmente umfasst. Die erste Gruppe verstellbarer Segmente bildet einen stromaufwärtigen konvergenten Bereich der Schubdüse. Die zweite Gruppe verstellbarer Segmente bildet einen stromabwärtigen konstant/divergenten Bereich der Schubdüse. Es ist vorgesehen, dass die Segmente der ersten Gruppe oder die Segmente der zweiten Gruppe zumindest in einem Bereich, der an die andere Gruppe angrenzt, zum Strömungskanal hin konvex gekrümmt sind, dabei im Bereich der konvexen Krümmung die Düsenhalsfläche ausbilden und axial beanstandet zur axialen Position der Düsenhalsfläche an die Segmente der jeweils anderen Gruppe angrenzen.

Die Erfindung beruht somit auf dem Gedanken, die Innenwand der Schubdüse, die die radial äußere Berandung des Strömungskanals in der Schubdüse darstellt, im Bereich der Düsenhalsfläche mit einer konvexen Krümmung zu versehen. Der Übergang zwischen dem konvergenten Bereich der Schubdüse und dem divergenten Bereich der Schubdüse erfolgt damit nicht abrupt und unter Ausbildung eines Knicks, sondern allmählich und unter Ausbildung einer glatten Innenwand im Übergang zwischen dem konvergenten Bereich und dem divergenten Bereich. Durch die konvexe Krümmung der Innenwand im Bereich der Düsenhalsfläche und den damit einhergehenden sanften Übergang zwischen dem konvergenten Bereich der Schubdüse und dem divergenten Bereich der Schubdüse wird die Erzeugung von Schockwellen in der Schubdüse reduziert und damit eine Lärmverringerung erreicht. Insbesondere werden schwächere Schockwellen erzeugt, die im Vergleich zu starken Schockwellen weniger Lärm und weniger Verluste erzeugen.

Die Erfindung umfasst dabei zwei grundsätzliche Ausgestaltungen. Gemäß der einen Ausgestaltung sind die Segmente der ersten Gruppe, die den stromaufwärtigen konvergenten Bereich der Schubdüse bilden, zum Strömungskanal hin konvex gekrümmt. Die Segmente der ersten Gruppe bilden somit die Düsenhalsfläche aus. Stromabwärts der Düsenhalsfläche grenzen sie an die Segmente der zweiten Gruppe an bzw. sind dort mit ihnen verbunden.

Gemäß der anderen Ausgestaltung sind die Segmente der zweiten Gruppe, die den stromabwärtigen konstant/divergenten Bereich der Schubdüse bilden, zum Strömungskanal hin konvex gekrümmt. Bei dieser Ausgestaltung bilden somit die Segmente der zweiten Gruppe die Düsenhalsfläche aus. Stromaufwärts der Düsenhalsfläche grenzen sie an die Segmente der ersten Gruppe an bzw. sind dort mit ihnen verbunden.

Die beiden genannten grundsätzlichen Ausgestaltungen sehen somit eine Ausbildung des gekrümmten bzw. gewölbten Bereichs durch die erste Gruppe verstellbarer Segmente oder durch die zweite Gruppe verstellbarer Segmente vor.

Es wird darauf hingewiesen, dass die Formulierung, dass Segmente der ersten Gruppe und Segmente der zweiten Gruppe aneinander angrenzen, im Sinne der vorliegenden Erfindung eine Vielzahl von Übergängen zwischen den Enden der Segmente der jeweiligen Gruppen umfasst. Dabei gilt allgemein, dass stromabwärts der Umfangslinie, an der die Segmente der beiden Gruppen aneinander angrenzen, der Strömungskanal nicht mehr durch die erste Gruppe von Segmenten, sondern nunmehr durch die zweite Gruppe von Segmenten gebildet ist. Der Kontakt bzw. Übergang zwischen den Segmenten der beiden Gruppen kann dabei auf vielfältige Weise erfolgen. Wie noch erläutert werden wird, kann der Kontakt bzw. Übergang durch Überlappung, beispielsweise in Verbindung mit einem Schiebemechanismus realisiert sein. Alternativ können die Segmente dort, wo sie aneinander anliegen bzw. aneinander angrenzen, über Gelenkverbindungen wie zum Beispiel Scharniere miteinander verbunden sein. Grundsätzlich ist es auch möglich, dass ein Angrenzen der Segmente der jeweiligen Gruppen lediglich bedeutet, dass die einander zugewandten Enden der Segmente einander benachbart sind, ohne dass notwendigerweise eine mechanische Verbindung oder Überlappung besteht.

Der hintere konstant/divergente Bereich der Schubdüse weist abhängig vom Betriebszustand der Schubdüse entweder eine im Wesentlichen konstante Querschnittsfläche oder eine in Strömungsrichtung zunehmende Querschnittsfläche auf.

Gemäß einer Ausgestaltung der Erfindung ist vorgesehen, dass die Segmente der beiden Gruppen derart aneinander angrenzen, dass jeweils zwei Segmente einander überlappen. Dabei ist vorgesehen, dass jeweils ein geradlinig ausgebildetes Segment der einen Gruppe ein konvex gekrümmtes Segment der anderen Gruppe überlappt. Dabei wird darauf hingewiesen, dass ein gradlinig ausgebildetes Segment nur in seiner axialen bzw. Längsrichtung gradlinig ausgebildet sein muss. In Richtungen senkrecht zur axialen Richtung kann es durchaus gebogen ausgebildet sein.

Es kann vorgesehen sein, dass zwei Segmente der beiden Gruppen jeweils derart aneinander anliegen und zueinander ausgerichtet sind, dass das geradlinig ausgebildete Segment die tangentiale Verlängerung des konvex gekrümmten Segments bildet. Bezogen auf den Strömungskanal verläuft das geradlinige Segment somit entlang der Tangente, die das gekrümmte Segment an dem Punkt bzw. der Umfangslinie aufweist, an der das geradlinige Segment am gekrümmten Segment anliegt. Das gekrümmte Segment taucht dabei seiner Krümmung folgend hinter der Umfangslinie, an der die beiden Segmente aneinander anliegen, hinter dem geradlinigen Segment ab und begrenzt somit ab dieser Umfangslinie nicht mehr den Strömungskanal.

Weiter sieht eine Ausgestaltung der Erfindung vor, dass das geradlinig ausgebildete Segment radial innen an dem konvex gekrümmten Segment der anderen Gruppe anliegt und/oder an seinem dem konvex gekrümmten Segment zugewandten Ende eine angeschrägte Kante ausbildet. Durch die angeschrägte Kante wird eine glatte Berandung des Strömungskanals am Übergang zwischen den in axialer Richtung hintereinander angeordneten Segmenten bzw. dem stromaufwärtigen konvergenten Bereich und dem stromabwärtigen konstant/divergenten Bereich der Schubdüse bereitgestellt. Die genannte Reihenfolge der Überlappung bewirkt, dass das gradlinig ausgebildete Segment bezogen auf den Strömungskanal vor dem (also radial innen zum) konvex gekrümmten Segment liegt. Hierdurch wird ein stets glatter Übergang zwischen den Segmenten auch dann gewährleistet, wenn sich bei einer Änderung der Düsenhalsfläche der Überlappungsgrad zwischen den Segmenten ändert.

Eine weitere Ausgestaltung der Erfindung sieht vor, dass die konvex gekrümmten Segmente der einen Gruppe nur in dem Bereich, der an die Segmente der anderen

Gruppe angrenzt, konvex gekrümmt sind und sich ansonsten in Längsrichtung im Wesentlichen geradlinig erstrecken. Die Krümmung der Segmente erstreckt sich somit bis zu dem Segmentende oder -anfang, das dem Segmentanfang oder -ende des angrenzenden Segments der anderen Gruppe zugewandt ist. Mit anderen Worten sind die gekrümmten Segmente dort, wo sie die Düsenhalsfläche ausbilden, und weiter bis zu ihren Enden, die an die Segmente der jeweils anderen Gruppe angrenzen, konvex gekrümmt, ansonsten aber geradlinig ausgebildet sind. Grundsätzlich ist es jedoch ebenfalls möglich, dass die gekrümmten Segmente über ihre gesamte Länge gekrümmt ausgebildet sind.

Mit anderen Worten ist vorgesehen, dass in einer Ausgestaltung die Segmente der ersten Gruppe, die den stromaufwärtigen, konvergierenden Bereich der Schubdüse ausbilden, vor der Düsenhalsfläche konisch konvergieren und im Bereich der Düsenhalsfläche und weiter bis zu ihrem stromabwärtigen Ende zum Strömungskanal hin konvex gewölbt sind. In einer anderen Ausgestaltung ist vorgesehen, dass die Segmente der zweiten Gruppe verstellbarer Segmente, die den stromabwärtigen konstant/divergenten Bereich der Schubdüse ausbilden, im Bereich der Düsenhalsfläche und weiter bis zu ihrem stromaufwärtigen Ende zum Strömungskanal hin konvex gewölbt und zu ihrem stromabwärtigen Ende konisch divergieren.

Gemäß der Erfindung ist weiter vorgesehen, dass aneinander angrenzende Segmente der beiden Gruppen durch einen Schiebemechanismus miteinander verbunden sind, wobei die aneinander angrenzenden Segmente der beiden Gruppen sich überlappen. Der Schiebemechanismus ist dazu ausgebildet, dass bei einer Verstellung der Düsenhalsfläche die aneinander angrenzenden Segmente ihren Überlappungsgrad ändern. Hierdurch ist bei jeder eingestellten Größe der Düsenhalsfläche ein glatter Übergang zwischen den aneinander angrenzenden Segmenten der beiden Gruppen ermöglicht.

Durch die Realisierung eines Übergangs und Kontakts zwischen Segmenten der ersten Gruppe und Segmenten der zweiten Gruppe mittels eines Schiebemechanismus ist es möglich, auch Krümmungen an den Segmenten der ersten Gruppe oder der zweiten Gruppe zu realisieren, bei denen die Schwenkachse des konvex gekrümmten Bereichs außerhalb der Schubdüse liegt.

Der Schiebemechanismus kann grundsätzlich auf vielfältige Weise realisiert sein, beispielsweise unter Bereitstellung einer Schiene an dem einen Segment und eines darauf verschiebbaren, mit dem anderen Segment verbundenen Führungselements. Eine Ausgestaltung hierzu sieht vor, dass der Schiebemechanismus eine gekrümmte Längsführung aufweist, die auf der dem Strömungskanal abgewandten Seite der Segmente ausgebildet ist.

Dazu sieht ein Ausführungsbeispiel eine gekrümmte Längsführung derart vor, dass die Längsführung eine gekrümmte Schiene aufweist, die entsprechend der konvexen Krümmung des konvex gekrümmten Segments gekrümmt und mit dem nicht konvex gekrümmten Segment verbunden ist. Weiter umfasst die Längsführung ein entsprechend der konvexen Krümmung des konvex gekrümmten Segments gekrümmtes längliches Aufnahmeprofil, das an dem konvex gekrümmten Segment ausgebildet ist. Dabei ist die gekrümmte Schiene in dem gekrümmten Aufnahmeprofil längs verschiebbar.

In weiteren alternativen Ausgestaltungen ist der Schiebemechanismus entsprechend einem Mechanismus aufgebaut, wie er zum Ausfahren von Hinterklappen oder Vorderklappen an Tragflächen eingesetzt wird, typischerweise unter Verwendung eines linear verfahrbaren Gestänges. Auch kann der Schiebemechanismus einen Rollmechanismus umfassen.

Die Schubdüse kann als dreidimensionale Schubdüse oder als zweidimensionale Schubdüse ausgebildet sein. Dementsprechend weist sie entweder einen im wesentlichen kreisförmigen Querschnitt oder einen im wesentlichen rechteckigen Querschnitt (mit Abrundungen an den Kanten) auf.

Im Falle einer dreidimensionalen Schubdüse sind die Segmente der beiden Gruppen jeweils in Umfangsrichtung um die Längsachse der Schubdüse verteilt angeordnet. Bei den Segmenten handelt es sich insbesondere um die Lamellen oder Klappen einer Iris/Petal-Düse. Die einzelnen Segmente beider Gruppen sind dabei jeweils einzeln mittels zugeordneter Aktuatoren verstellbar. Die Verstellung der Segmente einer Gruppe kann dabei individuell für jedes Segment oder alternativ beispielsweise über einen Verstellring erfolgen, der mit den Segmenten der Gruppe verbunden ist und bei dessen Verstellung die Segmente mit verstellt werden.

Im Falle einer zweidimensionalen Schubdüse sieht eine Ausgestaltung der Erfindung vor, dass die Schubdüse im stromaufwärtigen konvergenten Bereich zwei einander gegenüberstehende feststehende Wände (die parallel ausgerichtet sein können) und zwei einander gegenüberstehende verstellbare Wände aufweist und im stromabwärtigen divergenten Bereich ebenfalls zwei einander gegenüberstehende feststehende Wände (die parallel ausgerichtet sein können) und zwei einander gegenüberstehende verstellbare Wände aufweist. Dabei ist vorgesehen, dass die verstellbaren Wände des konvergenten Bereichs oder die verstellbaren Wände des divergenten Bereichs zum Strömungskanal hin konvex gekrümmt sind, im Bereich der konvexen Krümmung die Düsenhalsfläche ausbilden und axial beabstandet zur axialen Position der Düsenhalsfläche an den verstellbaren Wänden des jeweils anderen Bereichs anliegen. Die beiden feststehende Wände sind beispielsweise zwei Seitenwände und die beiden verstellbaren Wände eine obere Wand und eine untere Wand. Alternativ sind die Seitenwände verstellbar.

Eine Ausgestaltung hierzu sieht vor, dass die Schubdüse sowohl im stromaufwärtigen konvergenten Bereich als auch im stromabwärtigen divergenten Bereich als weitere verstellbare Segmente im Umfangsrichtung abgerundete Segmente in den Eckbereichen zwischen den feststehenden Wänden und den verstellbaren Wänden aufweist, wobei für die abgerundeten Segmente ebenfalls gilt, dass die abgerundeten Segmente des konvergenten Bereichs oder die abgerundeten Segmente des divergenten Bereichs zum Strömungskanal hin konvex gekrümmt sind, im Bereich der konvexen Krümmung die Düsenhalsfläche (A8) mit ausbilden und axial beabstandet zur axialen Position der Düsenhalsfläche an einem abgerundeten Segment des jeweils anderen Bereichs anliegen.

Eine weitere Ausgestaltung der Erfindung sieht vor, dass die Segmente der ersten Gruppe und die Segmente der zweiten Gruppe derart aneinander angrenzen, dass zwischen ihnen aus dem Strömungskanal Gas in einen Hohlraum zwischen der Innenwand und einer Außenwand der Schubdüse strömt, wobei dieser Hohlraum derart ausgestaltet ist, dass das eingeströmte Gas im Bereich einer Hinterkantenspalte zwischen der Innenwand und der Außenwand aus dem Hohlraum bzw. der Schubdüse austritt. Alternativ oder ergänzend kann vorgesehen sein, dass am stromaufwärtigen Ende des stromaufwärtigen konvergenten Bereichs der Schubdüse Durchlässe in der Innenwand der Schubdüse derart ausgebildet sind, dass Gas in einen Hohlraum zwischen der Innenwand und einer Außenwand der Schubdüse strömt, wobei der Hohlraum derart ausgestaltet ist, dass das eingeströmte Gas im Bereich einer Hinterkantenspalte zwischen der Innenwand und der Außenwand aus dem Hohlraum bzw. der Schubdüse austritt. In beiden Fällen wird durch das austretende Gas der Luft am Umfang des Düsenaustritts zusätzliche Energie zugeführt und damit eine Reduzierung des Heckwiderstands ("base drag") erreicht.

Gemäß einem weiteren Erfindungsaspekt betrifft die Erfindung eine konvergent-divergente Schubdüse für ein Turbofan-Triebwerk eines Überschallflugzeugs, die aufweist:
- eine Innenwand, die einen Strömungskanal durch die Schubdüse radial außen begrenzt, wobei der Strömungskanal eine Düsenhalsfläche und eine Düsenaustrittsfläche ausbildet,
- wobei die Innenwand umfasst: eine erste Gruppe verstellbarer Segmente, die einen stromaufwärtigen konvergenten Bereich der Schubdüse ausbilden, und eine zweite Gruppe verstellbarer Segmente, die einen stromabwärtigen konstant/divergenten Bereich der Schubdüse ausbilden,
- wobei die Segmente der ersten Gruppe oder die Segmente der zweiten Gruppe zumindest in einem Bereich, der an die andere Gruppe angrenzt, zum Strömungskanal hin konvex gekrümmt sind, im Bereich der konvexen Krümmung die Düsenhalsfläche ausbilden und axial beabstandet zur axialen Position der Düsenhalsfläche an den Segmenten der jeweils anderen Gruppe anliegen,
- die Segmente der beiden Gruppen derart aneinander angrenzen, dass jeweils zwei Segmente einander überlappen, wobei jeweils ein geradlinig ausgebildetes Segment der einen Gruppe ein konvex gekrümmtes Segment der anderen Gruppe überlappt, und wobei
- dass die konvex gekrümmten Segmente der einen Gruppe nur in einem Bereich, der an die Segmente der anderen Gruppe angrenzt, konvex gekrümmt sind und sich ansonsten in Längsrichtung im Wesentlichen geradlinig erstrecken.

Gemäß einem weiteren Aspekt wird ein Verfahren zur Reduzierung des Heckwiderstands hinter einer Schubdüse insbesondere gemäß Anspruch 1 bereitgestellt, wobei das Verfahren umfasst:
- Leiten von Gas des Strömungskanals vor dem stromaufwärtigen Ende des stromaufwärtigen Bereichs der Schubdüse und/oder zwischen dem stromaufwärtigen und dem stromabwärtigen Bereich der Schubdüse in einen Hohlraum zwischen der Innenwand und einer Außenwand der Schubdüse;
- Leiten des eingeströmten Gases im Hohlraum zwischen der Innenwand und der Außenwand derart, dass dieses im Bereich eines Hinterkantenspalts zwischen der Innenwand und der Außenwand aus der Schubdüse austritt.

Das im Bereich einer Hinterkantenspalte zwischen der Innenwand und der Außenwand aus der Schubdüse austretende Gas führt der Strömung am Umfang des Düsenaustritts zusätzliche Energie zu und reduziert dadurch den Heckwiderstand der Schubdüse. Hierdurch wird die Effizienz der Schubdüse erhöht. Das Verfahren kann bei einer Schubdüse gemäß Anspruch 1 realisiert werden, grundsätzlich jedoch auch bei beliebigen anderen Schubdüsen, insbesondere konvergent-divergenten Schubdüsen, beispielsweise auch einer Schubdüse in Iris/Petal-Bauweise.

Eine Ausgestaltung hierzu sieht vor, dass Gas des Strömungskanals zwischen Segmenten der ersten Gruppe und Segmenten der zweiten Gruppe der Schubdüse in den Hohlraum strömt. Insbesondere ist dies für den Fall vorgesehen, dass die konvexe Krümmung im stromaufwärtigen, konvergenten Bereich der Schubdüse ausgebildet ist. Für diesen Fall strömt Gas des Strömungskanals dort in den Hohlraum, wo die Segmente des stromabwärtigen, konstant/divergenten Bereichs der Schubdüse mit den gekrümmten Segmenten des stromaufwärtigen, konvergenten Bereichs der Schubdüse überlappen. Hierzu ist beispielsweise im Überlappungsbereich ein Spalt zwischen den jeweiligen Segmenten vorgesehen, der sicherstellt, dass Gas in den Hohlraum einströmen kann.

Im alternativen Fall, dass die konvexe Krümmung im stromabwärtigen, konstant/divergenten Bereich der Schubdüse ausgebildet ist, ist der Spalt zwischen den Segmenten der beiden Bereiche der Schubdüse im Überlappungsbereich dagegen möglichst minimiert, um zu verhindern, dass Gas aus dem Hohlraum in den Strömungskanal einströmt. Denn in diesem Fall befindet sich der Spalt im konvergenten, konisch zusammenlaufenden Bereich der Schubdüse.

Eine weitere Ausgestaltung des Verfahrens sieht vor, das Gas am stromaufwärtigen Ende des stromaufwärtigen Bereichs vom Strömungskanal in den Hohlraum strömt, beispielsweise am Übergang zwischen dem stromaufwärtigen Ende der Segmente und einer festen Struktur, an der diese angelenkt sind. Dabei kann vorgesehen sein, dass auf ansonsten übliche Dichtungen verzichtet wird, was zusätzlich Kosten und Aufwand reduziert.

Eine weitere Ausgestaltung des erfindungsgemäßen Verfahrens sieht vor, dass der Hinterkantenspalt einen Strömungsquerschnitt aufweist, der sich abhängig von der eingestellten Düsenaustrittsfläche verändert und der am größten ist, wenn der stromabwärtige konstant/divergente Bereich der Schubdüse konstant (z.B. zylindrisch), d.h. mit konstantem Querschnitt ausgebildet ist. Entspricht der Situation beim Startschub MTO (MTO = Maximum Takeoff Thrust).

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse des Turbofan-Triebwerks. Von der x-Achse ausgehend zeigt die radiale Richtung radial nach außen. Begriffe wie "vor", "hinter", "vordere" und "hintere" beziehen sich immer auf die axiale Richtung bzw. die Strömungsrichtung im Triebwerk. Die Bezeichnung "vor" bedeutet somit "stromaufwärts" und die Bezeichnung "hinter" bedeutet "stromabwärts". Begriffe wie "äußere" oder "innere" beziehen sich immer auf die radiale Richtung.

In weiteren Aspekten betrifft die Erfindung ein Turbofan-Triebwerk mit einer Schubdüse gemäß Anspruch 1 und ein ziviles oder militärisches Überschallflugzeug mit einem solchen Turbofan-Triebwerk.

Die Erfindung wird nachfolgend unter Bezugnahme auf die Figuren der Zeichnung anhand mehrerer Ausführungsbeispiele näher erläutert. Es zeigen:
- Figur 1: ein Ausführungsbeispiel des hinteren Teils eines Turbofan-Triebwerks, das zur Verwendung in einem Überschallflugzeug geeignet ist, wobei der dargestellte Teil eine Schubdüse mit konvex gekrümmten Segmenten in einem stromaufwärtigen konvergenten Bereich der Schubdüse aufweist;
- Figur 2: die Schubdüse der Figur 1, wobei sich die konvex gekrümmten Segmente der Schubdüse in einer ersten Stellung befinden;
- Figur 3: die Schubdüse der Figur 1, wobei sich die konvex gekrümmten Segmente der Schubdüse in einer zweiten Stellung befinden;
- Figur 4: die Schubdüse der Figur 1, wobei sich die konvex gekrümmten Segmente der Schubdüse in einer dritten Stellung befanden
- Figur 5: die Schubdüse der Figur 1, wobei die drei Stellungen der konvex gekrümmten Segmente gemäß den Figuren 2 bis 4 gleichzeitig dargestellt sind;
- Figur 6: eine seitliche perspektivische Darstellung eines Schiebemechanismus, der der Verbindung von Segmenten des konvergenten Bereichs und von Segmenten des zylindrisch/divergenten Bereichs einer Schubdüse gemäß den Figuren 1 bis 5 dient, wobei der Schiebemechanismus an der dem Strömungskanal abgewandten Seite der Segmente ausgebildet ist;
- Figur 7: den Schiebemechanismus der Figur 6 in einer perspektivischen Darstellung schräg von hinten;
- Figur 8: eine seitliche perspektivische Darstellung des Schiebemechanismus der Figuren 6 und 7 in einer gegenüber den Figuren 6 und 7 anderen Verstellposition;
- Figur 9: den Schiebemechanismus der Figur 8 in einer perspektivischen Darstellung schräg von hinten;
- Figur 10: schematisch die Querschnitte einer dreidimensionalen und einer zweidimensionalen Schubdüse;
- Figur 11: im Längsschnitt ein Ausführungsbeispiel einer zweidimensionalen Schubdüse, die in einem stromaufwärtigen konvergenten Bereich der Schubdüse konvex gekrümmte Segmente aufweist;
- Figur 12: die Schubdüse der Figur 11 in einer Ansicht schräg von vorne;
- Figur 13: die Schubdüse der Figur 11 in einer Ansicht schräg von hinten;
- Figur 14: einen Längsschnitt der Schubdüse der Figuren 11 bis 13 in einer gegenüber den Figuren 11 bis 13 anderen Verstellposition der konvex gekrümmten Segmente;
- Figur 15: die Schubdüse der Figur 14 in einer Ansicht schräg von vorne; und
- Figur 16: die Schubdüse der Figur 14 in einer Ansicht schräg von hinten.

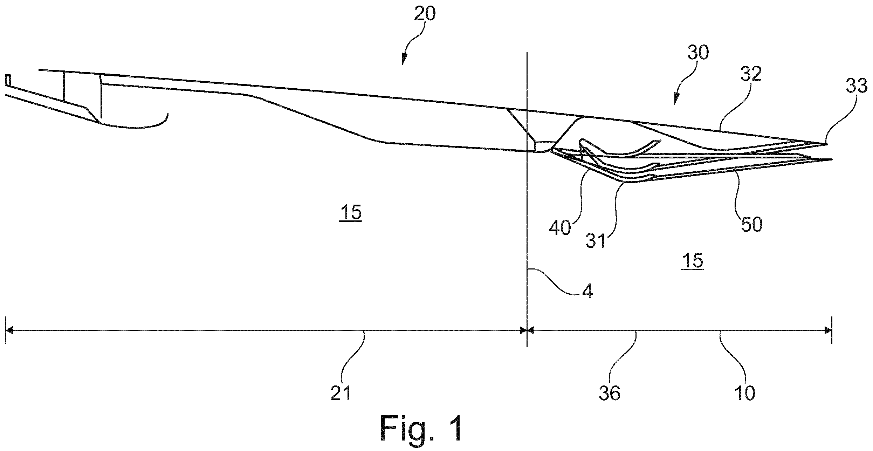

Die Figur 1 zeigt den hinteren Teil eines Turbofan-Triebwerks, das dafür vorgesehen und geeignet ist, in einem zivilen oder militärischen Überschallflugzeug eingesetzt zu werden und dementsprechend für Betriebszustände im subsonischen Bereich, im transsonischen Bereich und im supersonischen Bereich ausgelegt ist.

Das Turbofan-Triebwerk umfasst im nicht dargestellten vorderen Teil einen Triebwerkseinlauf, einen Fan, der mehrstufig ausgebildet sein kann, einen Primärstromkanal, der durch ein Kerntriebwerk führt und einen Sekundärstromkanal oder Bypass-Kanal, der an dem Kerntriebwerk vorbei führt.

Der Triebwerkseinlauf bildet einen Überschall-Lufteinlauf und ist dementsprechend dafür vorgesehen und geeignet, die einströmende Luft auf Geschwindigkeiten unterhalb Ma 1,0 (Ma = Mach-Zahl) zu verzögern. Der Triebwerkseinlauf kann angeschrägt ausgebildet sein, um im Überschallflug eine günstige Verdichtungsstosskonfiguration zu erzielen.

Das Kerntriebwerk weist einen Verdichter, eine Brennkammer und eine Turbine auf. Beispielsweise umfasst der Verdichter einen Hochdruckverdichter und einen Niederdruckverdichter, wobei ein Niederdruckverdichter durch die nabennahen Bereiche des Fans gebildet ist. Die hinter der Brennkammer angeordnete Turbine umfasst eine Hochdruckturbine und eine Niederdruckturbine. Die Hochdruckturbine treibt eine Hochdruckwelle an, die die Hochdruckturbine mit dem Hochdruckverdichter verbindet. Die Niederdruckturbine treibt eine Niederdruckwelle an, die die Niederdruckturbine mit dem Fan verbindet. Gemäß einer alternativen Ausgestaltung kann das Turbofantriebwerk zusätzlich einen Mitteldruckverdichter, eine Mitteldruckturbine und eine Mitteldruckwelle aufweisen.

Das Turbofan-Triebwerk umfasst des Weiteren einen Mischer, der Luft des Sekundärstromkanals und des Primärstromkanals hinter dem Kerntriebwerk mischt,

Das Turbofan-Triebwerk ist in einer Triebwerksgondel angeordnet. Diese ist beispielsweise über einen Pylon mit dem Flugzeugrumpf verbunden.

Bezug nehmend auf die Figur 1 umfasst das Turbofan-Triebwerk eine Maschinenachse 10 oder Triebwerksmittellinie. Die Maschinenachse definiert eine axiale Richtung des Turbofan-Triebwerks. Eine radiale Richtung des Turbofan-Triebwerks verläuft senkrecht zur axialen Richtung. Hinter dem Mischer bildet das Triebwerk einen Strömungskanal 15, der sich durch eine konvergent-divergente Schubdüse 30 erstreckt, die eine axiale Länge 36 aufweist. Das Triebwerk umfasst im dargestellten Ausführungsbeispiel des Weiteren einen Schubumkehrer 20, der stromaufwärts der Schubdüse 30 ausgebildet ist und sich über eine axiale Länge 21 erstreckt. Ein solcher Schubumkehrer 20 ist optional. Optional kann des Weiteren zusätzlich ein Nachbrenner vorgesehen sein.

Die in der Figur 1 senkrecht zur Maschinenachse 10 verlaufende Linie 4 ist eine gedachte Linie und kennzeichnet die axiale Position, an der der Schubumkehrer 20 endet und die Schubdüse 30 beginnt.

Strukturell wird die Schubdüse 30 durch eine Innenwand 31 und eine Außenwand 32 gebildet. Dabei bildet die Innenwand 31 die radial äußere Berandung des Strömungskanals 15 in der Schubdüse 30. Die Außenwand 32 ist radial außen zur Innenwand 31 ausgebildet und grenzt an die Umgebung an. Sie kann mehrere Wandungen umfassen. Die Innenwand 31 und die Außenwand 32 laufen stromabwärts spitz aufeinander zu und bilden an ihrem stromabwärtigen Ende eine Düsenaustrittskante 33.

Die Innenwand 31 besteht aus einer ersten Gruppe verstellbarer Segmente 40, die einen stromaufwärtigen konvergenten Bereich der Schubdüse 30 ausbilden, und aus einer zweiten Gruppe verstellbarer Segmente 50, die einen stromabwärtigen zylindrisch/divergenten Bereich der Schubdüse 30 ausbilden. Die verstellbaren Segmente 40, 50 jeder Gruppe sind in Umfangsrichtung rotationssymmetrisch um die Maschinenachse 10 angeordnet. Die Außenwand 32 kann ebenfalls aus einer Gruppe verstellbarer Segmente bestehen. Das dargestellte Ausführungsbeispiel betrifft eine dreidimensionale Schubdüse mit einem kreisförmigen Querschnitt der Innenwand 31.

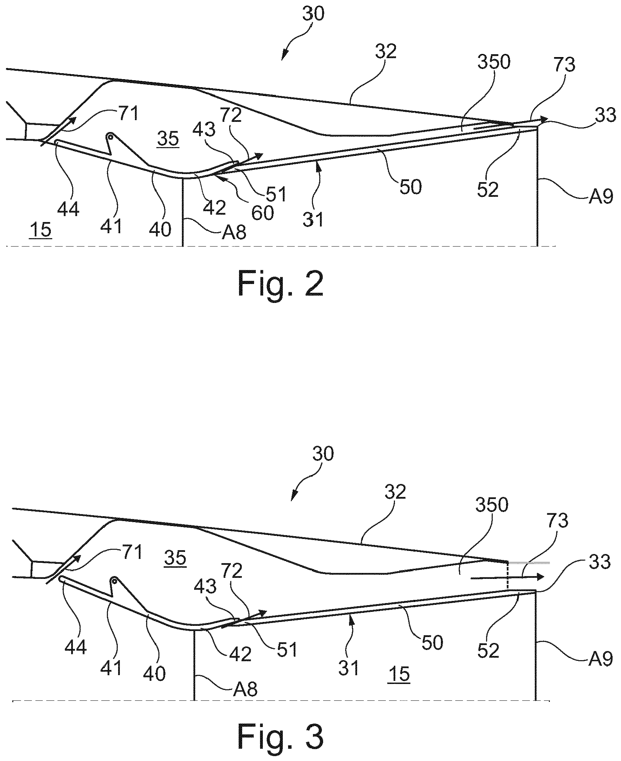

Die Ausgestaltung der Schubdüse 30 wird unter Bezug auf die Figuren 2 bis 5 weitergehend erläutert. In der dargestellten Schnittansicht ist dabei jeweils ein verstellbares Segment 40 der ersten Gruppe und ein verstellbares Segment 50 der zweiten Gruppe dargestellt. Es versteht sich, dass jede Gruppe eine Vielzahl solcher Segmente aufweist, die in Umfangsrichtung aneinandergrenzend angeordnet sind und zusammen die äußere Berandung des Strömungskanals 15 bilden.

Das verstellbare Segment 40 der ersten Gruppe weist gemäß der Figur 2 einen ersten stromaufwärtigen Bereich 41 und einen zweiten stromabwärtigen Bereich 42 auf. Der stromaufwärtige Bereich 41 endet am stromaufwärtigen Ende 44 des Segments 40. Der stromabwärtige Bereich 42 endet am stromabwärtigen Ende 43 des Segments 40. Das Segment 40 ist im stromaufwärtigen Bereich 41 gradlinig ausgebildet. Dies bedeutet, dass es in dem geradlinigen Bereich in Längsrichtung nicht gekrümmt ist. Im stromabwärtigen Bereich 42 ist das Segment 40 dagegen gekrümmt ausgebildet, und zwar derart, dass es zum Strömungskanal 15 hin konvex gekrümmt ist, somit zum Strömungskanal 15 hin eine Ausbuchtung bildet.

In seinem konvex gekrümmten stromabwärtigen Bereich 42 bildet das Segment 40 die Düsenhalsfläche A8 des Strömungskanals 15 aus. Die Düsenaustrittsfläche A9 ist naturgemäß an der Düsenaustrittskante 33 ausgebildet. Als Düsenhalsfläche wird dabei die engste Querschnittsfläche des Strömungskanals 15 und als Düsenaustrittsfläche die Querschnittsfläche des Strömungskanals 15 am hinteren Ende der Schubdüse 30 bezeichnet.

Der gekrümmte Bereich 42 beginnt dabei im Hinblick auf seine axiale Position vor der Düsenhalsfläche A8 und erstreckt sich bis zum stromaufwärtigen Ende 43 des Segments 40. Die Düsenhalsfläche A8 ist damit in einem glatten, stetig gekrümmten Bereich der Innenwand 31 der Schubdüse 30 ausgebildet. Hierdurch wird die Entstehung von Schockwellen beim Übergang der Strömung vom subsonischen Bereich vor der Düsenhalsfläche A8 zum supersonischen Bereich hinter der Düsenhalsfläche A8 vermieden oder reduziert.

Stromabwärts der Düsenhalsfläche A8 grenzt das Segment 40 an das sich axial anschließende Segment 50 der zweiten Gruppe verstellbarer Segmente an, die den stromabwärtigen zylindrisch/divergenten Bereich der Schubdüse 30 bilden. Das Segment 50 der zweiten Gruppe ist gradlinig ausgebildet, d.h. es ist in Längsrichtung nicht gekrümmt. In Querrichtung kann es gekrümmt sein, muss es jedoch nicht. Das Segment 50 weist ein stromaufwärtiges Ende 51 und ein stromabwärtiges Ende 52 auf, wobei es am stromabwärtigen Ende 52 die Düsenaustrittskante 33 bildet.

Der Übergang zwischen dem Segment 40 und dem Segment 50 ist derart ausgebildet, dass sich die beiden Segmente 40, 50 an ihren einander zugewandten Enden 43, 51 überlappen. Weiter verhält es sich so, dass das Segment 50 radial innen an dem konvex gekrümmten Bereich 42 des Segments 40 anliegt. Dabei ist vorgesehen, dass das gradlinig ausgebildete Segment 50 die tangentiale Verlängerung des Segments 40 darstellt. Dies bedeutet, dass das gradlinig ausgebildete Segment 50 entsprechend einer Tangente ausgerichtet ist, die an den konvex gekrümmten Bereich 42 des Segmentes 40 an der Stelle 60 angelegt ist, an der das stromaufwärtige Ende 51 des gradlinig verlaufenden Segments 50 am Segment 40 anliegt und von der ab in axialer Richtung das Segment 50 die innere Berandung des Strömungskanals 15 ausbildet.

Dabei ist gemäß einer Ausgestaltung vorgesehen, dass das Segment 50 an seinem stromaufwärtigen Ende 51 angeschrägt ist, so dass ein glatter Übergang zwischen den beiden Segmenten 40, 50 bereitgestellt ist.

Insgesamt ergibt sich mittels der Segmente 40, 50 in Strömungsrichtung zunächst ein gradlinig konvergierender, d.h. konischer Bereich des Strömungskanals 15 (berandet durch den geradlinigen Bereich 41 der Segmente 40), an den sich ein konvex gekrümmter Bereich anschließt (berandet durch den konvex gekrümmten Bereich 42 der Segmente 40), der die Düsenhalsfläche A8 ausbildet und der sich stromabwärts der Düsenhalsfläche A8 weiter erstreckt, wobei sich an den konvex gekrümmten Bereich ein zylindrisch/divergenter Bereich 50 anschließt (berandet durch die geradlinigen Segmente 50). Der zylindrisch/divergente Bereich ist abhängig vom Betriebszustand bzw. der Ausrichtung der Segmente 50 entweder zylindrisch (mit konstanter Querschnittsfläche) oder divergent (mit in Strömungsrichtung zunehmender Querschnittsfläche) ausgebildet. Insgesamt liegt somit eine konvergent/zylindrische oder eine konvergent/divergente Schubdüse vor.

Zusätzlich zu der beschriebenen glatten und damit lärmarmen Ausbildung der Düsenhalsfläche A8 durch den gekrümmten Bereich 42 der Segmente 40 stellt die Schubdüse 30 eine weitere Funktionalität bereit. Es verhält sich so, dass sich zwischen der Innenwand 31 und der Außenwand 32 der Schubdüse 30 ein Hohlraum 35 erstreckt. Stromabwärts endet der Hohlraum in einer Hinterkantenspalte 350. Wie durch den Pfeil 71 angedeutet ist, strömt stromaufwärts des stromaufseitigen Endes 44 der Segmente 40 Gas aus dem Strömungskanal 15 über Durchlässe in der Innenwand 31 in den Hohlraum 35. Zusätzlich oder alternativ strömt Gas aus dem Strömungskanal 15 durch einen Spalt zwischen den sich überlappenden Enden 43, 51 der Segmente 40, 50 in den Hohlraum 35. Die eingeströmte Luft verlässt den Hohlraum 35 über die Hinterkantenspalte 350, entsprechend dem Pfeil 73. Die aus der Hinterkantenspalte 350 austretende Luft führt dem Luftstrom am Umfang der Düsenaustrittskante 33 zusätzliche Energie zu und reduziert dadurch den Heckwiderstand hinter der Schubdüse 30.

Die Figur 2 zeigt die Schubdüse 30 in einem supersonischen Betriebsmodus im Reiseflug. Die Düsenaustrittsfläche A9 ist maximal und die durch die Hinterkantenspalte 350 bereitgestellte Querschnittsfläche minimal.

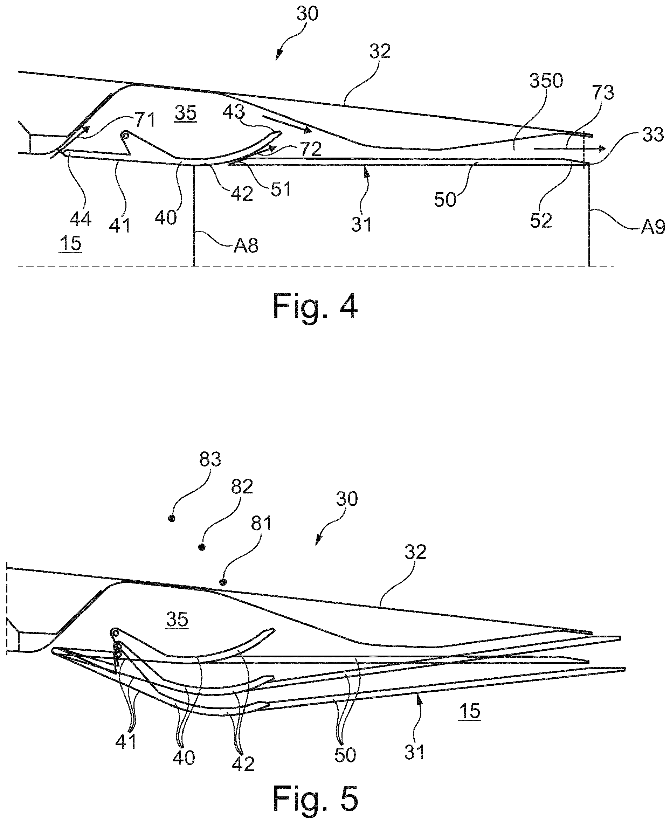

Demgegenüber zeigt die Figur 3 die Schubdüse 30 in einem subsonischen Betriebsmodus im Reiseflug. Die Düsenaustrittsfläche A9 ist gegenüber der Figur 2 verringert und die durch die Hinterkantenspalte 350 bereitgestellte Querschnittsfläche vergrößert. Die Figur 4 zeigt das Triebwerk im Startschub (MTO - Maximum Takeoff Thrust). Die Düsenaustrittsfläche A9 ist minimal, wobei der stromabwärtige Bereich der Schubdüse 30 für diesen Fall zylindrisch ausgebildet ist. Die durch den Hinterkantenspalt 350 bereitgestellte Querschnittsfläche ist maximal.

Die Figur 5 zeigt die drei Betriebsmodi bzw. die drei damit einhergehenden Ausrichtungen der Segmente 40, 50, wobei jeweils unterschiedliche Kombinationen von Düsenhalsfläche A8 und Düsenaustrittsfläche A8 realisiert sind. Es ist gut zu erkennen, dass der Überlappungsgrad der Segmente 40, 50 variiert. Das stromabwärtige Ende 43 des konvex gekrümmten Bereichs 42 der Segmente 40 der ersten Gruppe verstellbarer Segmente ragt dabei in unterschiedlichem Maße in den Hohlraum 35 hinein.

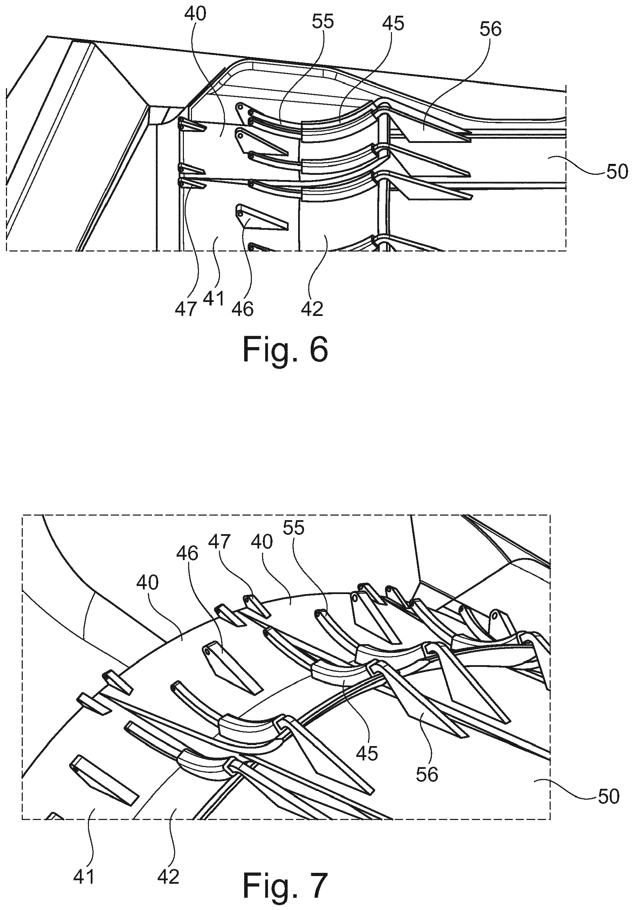

In die Figur 5 sind auch drei Schwenkachsen 81, 82, 83 eingezeichnet, die die Schwenkachse des konvex gekrümmten Bereichs 82 der Segmente 40 in den drei Konfigurationen der Figuren 2, 3 und 4 angeben. Es ist erkennbar, dass die Schwenkachsen 81, 82, 83 jeweils außerhalb der Schubdüse 30 liegen. Zur Realisierung einer Verstellung der Segmente 40, 50 ist daher, wie nachfolgend in Bezug auf die Figuren 6 bis 9 beschrieben, ein Schiebemechanismus vorgesehen, der es nicht erfordert, strukturelle Elemente auf der Schwenkachse anzuordnen.

Zunächst Bezug nehmend auf die Figuren 6 und 7 zeigen diese die dem Strömungskanal abgewandte Seite der Segmente 40, 50, d.h. die Seite, die in der Darstellung der Figuren 2 bis 5 dem Hohlraum 35 zugewandt ist. An dieser der Strömung abgewandten Seite ist als Schiebemechanismus eine gekrümmte Längsführung realisiert. Diese umfasst eine gekrümmte Schiene 55, die entsprechend der Krümmung des konvex gekrümmten Bereichs 42 der Segmente 40 gekrümmt ist und in einem länglichen, ebenfalls gekrümmten Aufnahmeprofil 45 geführt ist, das an dem konvex gekrümmten Bereich 42 des Segments 40 ausgebildet ist. Die gekrümmte Schiene 55 ist dabei über ein Befestigungselement 56 an dem stromabwärts angeordneten geradlinig ausgebildeten Segment 50 befestigt. Über die gekrümmte Schiene 55 und das gekrümmte Aufnahmeprofil 45 sind die Segmente 40, 50 definiert in Längsrichtung gegeneinander verschiebbar.

Die Innenseite der Segmente 40 umfasst des Weiteren an dem geradlinig ausgebildeten stromaufwärtigen Bereich 41 erste und zweite Befestigungselemente 46, 47. Über an den ersten Befestigungselementen 46 ausgebildete zylindrische Bohrungen oder dergleichen sind die Segmente 40 gelenkig mit nicht dargestellten ersten Aktuatoren verbunden, die beispielsweise hydraulisch oder pneumatisch betrieben und an einem fixen Teil der Schubdüse befestigt sind. Derartige Aktuatoren sind an sich bekannt und umfassen beispielsweise einen linear verfahrbaren Kolben. In entsprechender Weise sind die gekrümmten Schienen 55 über an diesen ausgebildete zylindrische Bohrungen oder dergleichen gelenkig mit nicht dargestellten zweiten Aktuatoren verbunden, die beispielsweise hydraulisch oder pneumatisch betrieben sind. Die zweiten Befestigungselemente 57 der Segmente 40 dienen der gelenkigen Verbindung der Segmente mit einer nicht dargestellten stromaufwärtigen festen Struktur.

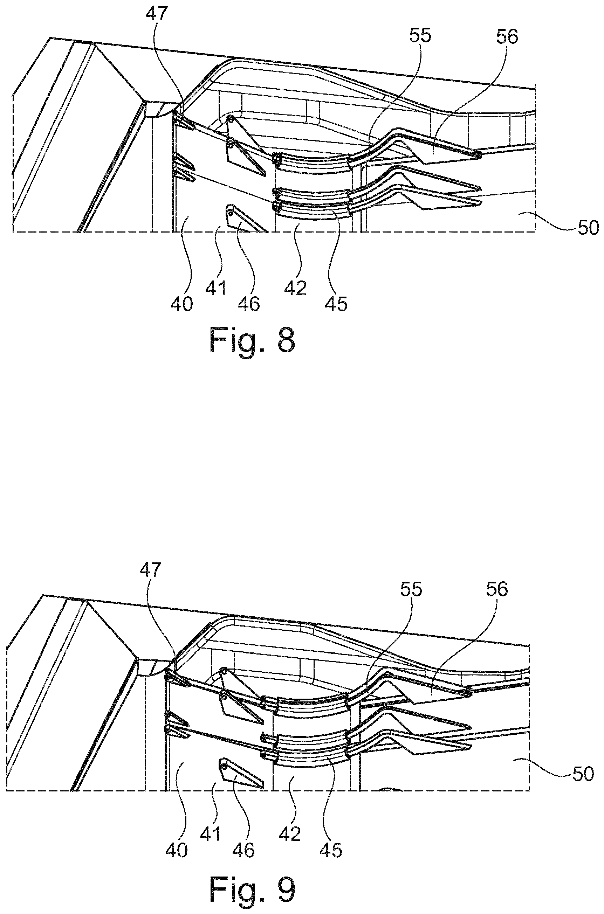

Die Figuren 8 und 9 zeigen die Segmente 40, 50 der Figuren 6 und 7 in einer anderen Position, in der der Überlappungsgrad zwischen den Segmenten 40, 50 minimal ist (Figur 8) oder gegenüber den Figuren 6 und 7 reduziert ist (Figur 9). Der grundsätzliche Aufbau ist der gleiche wie in den Figuren 6 und 7, so dass auf die diesbezügliche Beschreibung Bezug genommen wird.

Die Figuren 1 bis 9 betreffen ein Ausführungsbeispiel, bei dem die Schubdüse als dreidimensionale Schubdüse mit kreisförmigen Querschnitt ausgebildet ist. Alternativ kann vorgesehen sein, dass die Schubdüse als zweidimensionale Schubdüse mit im wesentlichen rechteckförmigen Querschnitt (mit Abrundungen an den Kanten) ausgebildet ist. Eine zweidimensionale Schubdüse ist mit dem Vorteil einer vereinfachten Ausführung der beweglichen Elemente der Schubdüse verbunden.

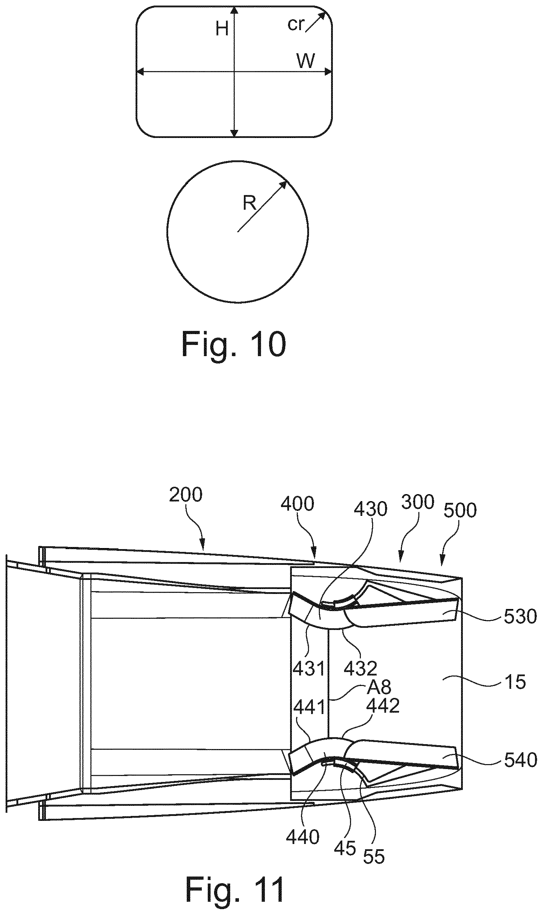

Die Figur 10 zeigt schematisch einen rechteckförmigen Querschnitt einer Schubdüse und einen kreisförmigen Querschnitt einer Schubdüse. Der dargestellte Querschnitt ist dabei jeweils der Querschnitt der Innenwand, der den Strömungskanal durch die Schubdüse radial außen begrenzt. Der rechteckförmige Querschnitt weist eine Höhe H und eine Weite W auf. Die Ecken sind abgerundet und umfassen einen Krümmungsradius cr. Der kreisförmige Querschnitt ist durch seinen Radius R definiert.

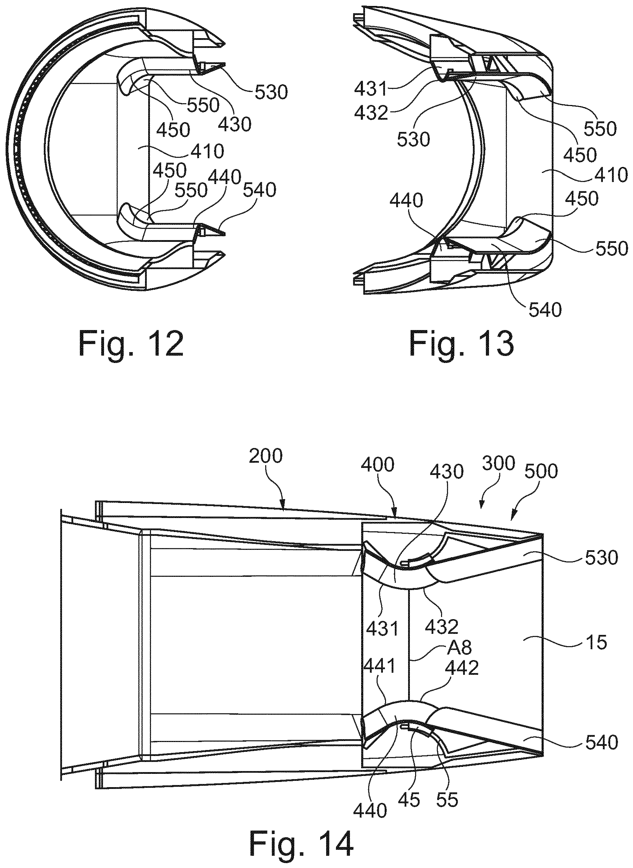

Die Figuren 11 bis 16 zeigen ein Ausführungsbeispiel einer zweidimensionalen Schubdüse 300, die entsprechend der vorliegenden Erfindung einen konvex gekrümmten Bereich aufweist, der die Düsenhalsfläche ausbildet. Die Figuren 11 bis 13 zeigen die Schubdüse 300 dabei in einer ersten Stellung und die Figuren 14 bis 16 die Schubdüse 300 in einer zweiten Stellung.

Die Figur 11 und 14 zeigen den hinteren Teil eines Turbofan-Triebwerks, der einen Schubumkehrer 200 und eine Schubdüse 300 umfasst. Die Schubdüse 300 umfasst in einem stromaufwärtigen, konvergenten Bereich 400 zwei feststehende Seitenwände, eine verstellbare obere Wand 430 und eine verstellbare untere Wand 440. Ein sich in axialer Richtung daran anschließender stromabwärtiger, divergenter Bereich 500 umfasst ebenfalls zwei feststehende Seitenwände, ein verstellbare obere Wand 530 und eine verstellbare untere Wand 540. Die feststehenden Seitenwände des vorderen Bereich 400 und des hinteren Bereichs 500 können dabei durch die gleiche Wand gebildet sein. Zusätzlich sind - wie in den Figuren 12, 13 und 15, 16 erkennbar ist - sowohl im stromaufwärtigen Bereich 400 als auch im stromabwärtigen Bereich 500 verstellbare Ecksegmente 450, 550 ausgebildet, die in Umfangsrichtung mit einem Krümmungsradius versehen sind und sich in den Eckbereichen zwischen den Seitenwänden und den oberen und unteren Wänden 430, 440, 530, 540 erstrecken.

Die verstellbaren Wände 430, 440 und die verstellbaren Ecksegmente 450 stellen dabei eine erste Gruppe verstellbarer Segmente des stromaufwärtigen Bereichs 400 der Schubdüse 300 dar. Die verstellbaren Wände 530, 540 und die verstellbaren Ecksegmente 550 stellen eine zweite Gruppe verstellbarer Segmente des stromabwärtigen Bereichs 500 der Schubdüse 300 dar.

Wie insbesondere den Figuren 11 und 14 zu entnehmen ist, umfassen die obere und untere Wand 430, 440 jeweils einen stromaufwärtigen Bereich 431, 441 der geradlinig und dabei eben ausgebildet ist und einen stromabwärtigen Bereich 432, 442, der zum Strömungskanal 15 hin konvex gekrümmt ist. Im Bereich der konvexen Krümmung bildet die Schubdüse 300 dabei - entsprechend der dreidimensionalen Ausgestaltung der Figuren 1 bis 9 - die Düsenhalsfläche A8 aus.

Stromabwärts der Düsenhalsfläche A8 grenzt der konvex gekrümmte Bereich 432, 442 an die obere, bewegliche Wand 530 bzw. an die untere, bewegliche Wand 540 des hinteren Bereichs 500 der Schubdüse 300 an.

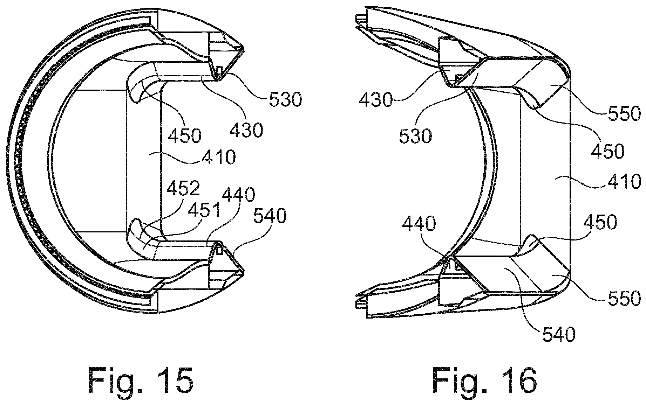

Weiter gilt auch für die Ecksegmente 450, 550, dass die Ecksegmente 450 des stromaufwärtigen, konvergierenden Bereichs 400 einen geradlinigen Bereich 451 und eine zum Strömungskanal hin konvex gekrümmten Bereich 452 aufweisen (vgl. Figur 15), wobei im Bereich der konvexen Krümmung die Düsenhalsfläche ausgebildet ist. Stromabwärts der Düsenhalsfläche liegt das Ecksegment 450 an einem Ecksegment 550 des hinteren, konvergenten Bereichs 500 an.

Die Düsenhalsfläche A8 wird somit durch die Querschnittsfläche in der Schubdüse 300 gebildet, in der aufgrund der konvexen Krümmung der oberen Wand 430, der unteren Wand 440 und der Eckbereiche 450 diese minimal ist. Durch die Bereitstellung einer konvex gekrümmten Begrenzung des Strömungskanals 15 im Bereich der Düsenhalsfläche A8 wird die Entstehung von Schockwellen und damit eine starke Lärmentwicklung effizient verhindert oder zumindest reduziert.

Die mechanische Verbindung zwischen den Wänden 430, 440 bzw. Eckbereichen 450 des vorderen Bereich 400 und den Wänden 530, 540 bzw. Eckbereichen 550 des vorderen Bereich 500 kann in entsprechender Weise wie in Bezug auf die Figuren 6 bis 9 beschrieben erfolgen. Entsprechende gekrümmte Längsführungen 45, 55 sind in den Figuren 11 und 14 dargestellt.

Weiter wird darauf hingewiesen, dass auch bei dem Ausführungsbeispiel der Figuren 11 bis 16 eine Reduzierung des Heckwiderstands durch das Leiten von Gas des Strömungskanals in einen Hohlraum zwischen der Innenwand und der Außenwand der Schubdüse und ein Abstrahlen dieses Gases an einem Hinterkantenspalt der Schubdüse erfolgen kann. Insofern wird auf die diesbezüglichen Erläuterungen zu den Figuren 1 bis 9 verwiesen. Eine Reduzierung des Heckwiderstandes wird dabei in besonderem Maße dadurch erreicht, dass auch in den Eckbereichen zusätzlich Gas in Bereiche niedrigen Drucks geleitet wird.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise sind die genaue Ausgestaltung der vorderen Segmente und der hinteren Segmente, insbesondere deren Länge und Krümmung nur beispielhaft zu verstehen. Auch wird darauf hingewiesen, dass bei den dargestellten Ausführungsbeispielen jeweils die Segmente der ersten Gruppe, die den stromaufwärtigen konvergenten Bereich der Schubdüse ausbilden, konvex gekrümmt sind. In entsprechender Weise können alternativ die Segmente der zweiten Gruppe, die den stromabwärtigen, konstant/divergenten Bereich der Schubdüse ausbilden, eine konvexe Krümmung ausbilden.

Es wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Konvergent-divergente Schubdüse (30, 300) für ein Turbofan-Triebwerk eines Überschallflugzeugs, die eine Innenwand (31) aufweist, die einen Strömungskanal (15) durch die Schubdüse (30, 300) radial außen begrenzt, wobei der Strömungskanal (15) eine Düsenhalsfläche (A8) und eine Düsenaustrittsfläche (A9) aufweist und die Innenwand (31) umfasst:
- eine erste Gruppe verstellbarer Segmente (40; 430, 440, 450), die einen stromaufwärtigen konvergenten Bereich der Schubdüse (30, 300) ausbilden, und
- und eine zweite Gruppe verstellbarer Segmente (50; 530, 540, 550), die einen stromabwärtigen konstant/divergenten Bereich der Schubdüse (30, 300) ausbilden,
**dadurch gekennzeichnet,**
**dass** die Segmente (40; 430, 440, 450) der ersten Gruppe oder die Segmente der zweiten Gruppe zumindest in einem Bereich (42; 432, 442, 452), der an die andere Gruppe angrenzt, zum Strömungskanal (15) hin konvex gekrümmt sind, im Bereich der konvexen Krümmung die Düsenhalsfläche (A8) ausbilden und axial beabstandet zur axialen Position der Düsenhalsfläche (A8) an die Segmente (50; 530, 540, 550) der jeweils anderen Gruppe (50) angrenzen,
wobei aneinander angrenzende Segmente (40, 50) der beiden Gruppen durch einen Schiebemechanismus (45, 55) miteinander verbunden sind, die aneinander angrenzenden Segmente der beiden Gruppen sich überlappen und der Schiebemechanismus dazu ausgebildet ist, bei einer Verstellung der Düsenhalsfläche (A8) den Überlappungsgrad der aneinander angrenzenden Segmente (40, 50) zu ändern.

2. Schubdüse nach Anspruch 1, **dadurch gekennzeichnet, dass** die Segmente (40; 430, 440, 450) der ersten Gruppe, die den stromaufwärtigen Bereich der Schubdüse ausbilden, zum Strömungskanal (15) hin konvex gekrümmt sind und im Bereich der konvexen Krümmung die Düsenhalsfläche (A8) ausbilden, wobei die Segmente (40; 430, 440, 450) der ersten Gruppe stromabwärts der Düsenhalsfläche (A8) an die Segmente (50; 530, 540, 550) der zweiten Gruppe angrenzen.

3. Schubdüse nach Anspruch 1, **dadurch gekennzeichnet, dass** die Segmente der zweiten Gruppe, die den stromabwärtigen Bereich der Schubdüse ausbilden, zum Strömungskanal (15) hin konvex gekrümmt sind und im Bereich der konvexen Krümmung die Düsenhalsfläche (A8) ausbilden, wobei die Segmente der zweiten Gruppe stromaufwärts der Düsenhalsfläche (A8) an die Segmente der ersten Gruppe angrenzen.

4. Schubdüse nach einem der vorangehenden Ansprüche, **dadurch gekennzeichnet, dass** die Segmente (40, 50) der beiden Gruppen derart aneinander angrenzen, dass jeweils zwei Segmente einander überlappen, wobei jeweils ein geradlinig ausgebildetes Segment (50) der einen Gruppe ein konvex gekrümmtes Segment (40) der anderen Gruppe überlappt.

5. Schubdüse nach Anspruch 4, **dadurch gekennzeichnet, dass** zwei Segmente (40, 50) der beiden Gruppen jeweils derart aneinander anliegen und zueinander ausgerichtet sind, dass das geradlinig ausgebildete Segment (50) die tangentiale Verlängerung des konvex gekrümmten Segments (40) bildet.

6. Schubdüse nach Anspruch 4 oder 5, **dadurch gekennzeichnet, dass** das geradlinig ausgebildete Segment (50) radial innen an dem konvex gekrümmten Segment (40) der anderen Gruppe anliegt.

7. Schubdüse nach einem der vorangehenden Ansprüche, **dadurch gekennzeichnet, dass** die konvex gekrümmten Segmente (40) der einen Gruppe nur in dem Bereich (42), der an die Segmente (50) der anderen Gruppe angrenzt, konvex gekrümmt sind und sich ansonsten in Längsrichtung im Wesentlichen geradlinig erstrecken.

8. Schubdüse nach einem der vorangehenden Ansprüche, **dadurch gekennzeichnet, dass** der Schiebemechanismus (44, 55) eine gekrümmte Längsführung aufweist, die auf der dem Strömungskanal abgewandten Seite der Segmente (40, 50) ausgebildet ist.

9. Schubdüse nach Anspruch 8, **dadurch gekennzeichnet, dass** für zwei aneinander angrenzende Segmente (40, 50) der beiden Gruppen die gekrümmte Längsführung derart ausgebildet ist, dass sie eine gekrümmte Schiene (55) aufweist, die entsprechend der konvexen Krümmung des konvex gekrümmten Segments (40) gekrümmt und mit dem nicht konvex gekrümmten Segment (50) verbunden ist, und ein entsprechend der konvexen Krümmung des konvex gekrümmten Segments (40) gekrümmtes längliches Aufnahmeprofil (45) aufweist, das am dem konvex gekrümmten Segments (40) ausgebildet ist, wobei die gekrümmte Schiene (55) in dem gekrümmten Aufnahmeprofil (45) längs verschiebbar ist.

10. Schubdüse nach einem der vorangehenden Ansprüche, **dadurch gekennzeichnet, dass** die Schubdüse (30) als dreidimensionale Schubdüse ausgebildet ist, wobei die Segmente (40, 50) der beiden Gruppen jeweils in Umfangsrichtung um die Maschinenachse (10) der Schubdüse verteilt sind.

11. Schubdüse nach einem der vorangehenden Ansprüche, **dadurch gekennzeichnet, dass** die Schubdüse (300) als zweidimensionale Schubdüse ausgebildet ist.

12. Schubdüse nach Anspruch 11, **dadurch gekennzeichnet, dass** die Schubdüse (300) im stromaufwärtigen konvergenten Bereich (400) zwei einander gegenüberstehende feststehende Wände (410) und zwei einander gegenüberstehende verstellbare Wände (430, 440) aufweist, im stromabwärtigen konstant/divergenten Bereich (500) ebenfalls zwei einander gegenüberstehende feststehende Wände (410) und zwei einander gegenüberstehende verstellbare Wände (530, 540) aufweist, und die verstellbaren Wände (430, 440) des konvergenten Bereichs (400) oder die verstellbaren Wände des divergenten Bereichs zum Strömungskanal (15) hin konvex gekrümmt sind, im Bereich der konvexen Krümmung die Düsenhalsfläche (A8) ausbilden und axial beabstandet zur axialen Position der Düsenhalsfläche an den verstellbaren Wänden (530, 540) des jeweils anderen Bereichs (500) anliegen.

13. Schubdüse nach Anspruch 12, **dadurch gekennzeichnet, dass** die Schubdüse (300) sowohl im stromaufwärtigen konvergenten Bereich (400) als auch im stromabwärtigen divergenten Bereich (500) als weitere verstellbare Segmente im Umfangsrichtung abgerundete Ecksegmente (450, 550) in den Eckbereichen zwischen den feststehenden Wänden und den verstellbaren Wänden aufweist, wobei für die abgerundeten Ecksegmente (450, 550) ebenfalls gilt, dass die abgerundeten Ecksegmente (450) des konvergenten Bereichs (400) oder die abgerundeten Ecksegmente des divergenten Bereichs zum Strömungskanal (15) hin konvex gekrümmt sind, im Bereich der konvexen Krümmung die Düsenhalsfläche (A8) mit ausbilden und axial beabstandet zur axialen Position der Düsenhalsfläche (A8) an einem abgerundeten Ecksegment (550) des jeweils anderen Bereichs (500) anliegen.

14. Schubdüse nach einem der vorangehenden Ansprüche, **dadurch gekennzeichnet, dass** die Segmente (40; 430, 440, 450) der ersten Gruppe und die Segmente (50; 530, 540, 550) der zweiten Gruppe derart aneinander angrenzen, das zwischen ihnen aus dem Strömungskanal (15) Gas in einen Hohlraum (35) zwischen der Innenwand (31) und einer Außenwand (32) der Schubdüse strömt, wobei dieser Hohlraum (35) derart ausgestaltet ist, dass das eingeströmte Gas im Bereich einer Hinterkantenspalte (350) zwischen der Innenwand (31) und der Außenwand (32) aus der Schubdüse austritt.

15. Schubdüse nach einem der vorangehenden Ansprüche, **dadurch gekennzeichnet, dass** am stromaufwärtigen Ende (44) des stromaufwärtigen konvergenten Bereichs der Schubdüse Durchlässe in der Innenwand (31) der Schubdüse (30) derart ausgebildet sind, dass Gas in einen Hohlraum (35) zwischen der Innenwand (31) und einer Außenwand (32) der Schubdüse strömt, wobei dieser Hohlraum (35) derart ausgestaltet ist, dass das eingeströmte Gas im Bereich einer Hinterkantenspalte (350) zwischen der Innenwand (31) und der Außenwand (32) aus der Schubdüse austritt.
